# EUROPEAN PATENT SPECIFICATION

(11) **EP 3 081 032 B1**
(45) Date of publication and mention of the grant of the patent: **15.07.2020**
(21) Application number: 14816087.2
(22) Date of filing: 11.12.2014
(51) Int. Cl.: H04W 36/00, H04W 36/14, H04W 40/36, H04W 12/06

(54) **HANDOVER FROM CELLULAR TO WLAN IN INTEGRATED NETWORK**
HANDOVER VON MOBILTELEFONEN VOM ZELLULAREN NETZ AN EIN WLAN IN EINEM INTEGRIERTEN NETZWERK
TRANSFERT DE CELLULAIRE À WLAN DANS UN RÉSEAU INTÉGRÉ

(30) Priority: 11.12.2013 US 201361914934 P; 10.12.2014 US 201414566104
(43) Date of publication of application: 19.10.2016
(73) Proprietor: Qualcomm Incorporated, San Diego, CA 92121-1714 (US)
(72) Inventor: CATOVIC, Amer, San Diego, California 92121-1714 (US); ZHAO, Suli, San Diego, California 92121-1714 (US); VEEREPALLI, Sivaramakrishna, San Diego, California 92121-1714 (US); PAYYAPPILLY, Ajith Tom, San Diego, California 92121-1714 (US)
(74) Representative: Carstens, Dirk Wilhelm
(86) International application number: PCT/US2014/069833
(87) International publication number: WO 2015/089323

(56) References cited:
- WO-A1-2013/004905
- WO-A1-2014/168549
- US-A1- 2012 063 428
- US-A1- 2013 121 322
- "Universal Mobile Telecommunications System (UMTS); LTE; Architecture enhancements for non-3GPP accesses (3GPP TS 23.402 version 11.8.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V11.8.0, 1 December 2013 (2013-12-01), XP014180175,
- NOKIA SIEMENS NETWORKS ET AL: "EAP based solution for SaMOG phase 2", 3GPP DRAFT; S2-124765_4560_(SAMOG_EAP)V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. New Orleans, USA 16 November 2012 (2012-11-16), XP050684388, Retrieved from the Internet: URL:http://www.3gpp.org/ftp/tsg_sa/WG2_Arc h/TSGS2_94_New_Orleans/Docs/ [retrieved on 2012-11-16]
- HUAWEI ET AL: "Merged SaMOG solution", 3GPP DRAFT; S2-130551_SAMOG_WCS_SOLUTION-V6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Prague, Czech Republic; 20130128 - 20130201 30 January 2013 (2013-01-30), XP050685019, Retrieved from the Internet: URL:http://www.3gpp.org/ftp/tsg_sa/WG2_Arc h/TSGS2_95_Prague/Docs/ [retrieved on 2013-01-30]

## Description

### FIELD

Certain aspects of the present disclosure generally relate to wireless communications and, more particularly, to techniques for seamless handover in a cellular (e.g., 3GPP) and wireless local area (WLAN) interworked network.

### BACKGROUND

Wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include Code Division Multiple Access (CDMA) systems, Time Division Multiple Access (TDMA) systems, Frequency Division Multiple Access (FDMA) systems, 3^{rd} Generation Partnership Project (3GPP) Long Term Evolution (LTE) systems, Long Term Evolution Advanced (LTE-A) systems, and Orthogonal Frequency Division Multiple Access (OFDMA) systems.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. As WiFi/WLAN networks become more integrated with 3GPP access networks, there is a growing need to provide seamless connectivity to users across different access technologies.

As wireless communication technology advances, a growing number of different radio access technologies are being utilized. For instance, many geographic areas are now served by multiple wireless communication systems, each of which can utilize one or more different air interface technologies. In order to increase versatility of wireless terminals in such a network environment, there recently has been an increasing trend toward multi-mode wireless terminals that are able to operate under multiple radio technologies. Terminals may switch between radio technologies, for example to offload traffic from a cellular network to a more lightly loaded wireless local area network. Data loss may occur in such transactions. Accordingly, methods for optimizing seamless inter-mode handovers to increase reliability and reduce data loss are desirable.

Attention is drawn to "Universal Mobile Telecommunications System (UMTS); LTE; Architecture enhancements for non-3GPP accesses (3GPP TS 23.402 version 11.8.0 Release 11)", which is a technical specification for Architecture enhancements for non-3GPP accesses.

Attention is drawn to US 2012/063428 A1, which is a technology for preventing packet loss and transferring packets to a switched interface with minimal delay, when a mobile node switches a using interface. According to the technology, when a MN is communicating with a MAG (WLAN), a PBU message has already been transmitted from the MAG (WLAN) to the LMA, and binding related to a WLAN connection is already registered in the LMA. When an interface switching event is generated, the MN transmits to the MAG (WLAN) via the WLAN connection, a binding in-advance registration message for registering a binding in advance. When the MAG (WLAN) detects disconnection of the WLAN connection, the MAG (WLAN) transmits a registration delete/trigger message to the LMA, registers and triggers in the LMA the in-advance registration binding registered in the MAG (WLAN), and deletes the PBU message.

### SUMMARY

In accordance with the present invention methods, apparatuses, and a computer readable medium, as set forth in the independent claims, respectively are provided. Preferred embodiments are described in the dependent claims.

In one aspect of the disclosure, a method for handing off a mobile entity receiving data packets from a packet gateway (P-GW) of a core network via a cellular wireless network, to receiving the data packets from the P-GW via a trusted wireless access network (TWAN), comprises:
receiving, by the mobile entity, a newly assigned Internet protocol, IP, address for the TWAN via an EAP-AKA procedure;
in response to receiving the newly assigned IP address, the mobile entity configuring an IP interface on TWAN with the newly assigned IP address;
determining by the mobile entity, whether the Internet Protocol (IP) interface of the mobile entity is ready to receive the data packets via the TWAN, and indicating, from the mobile entity to a TWAN gateway (TWAG), readiness to receive the data packets via the TWAN, based on the determining.

In one aspect of the disclosure, a method for handing off a mobile entity receiving data packets from a packet gateway (P-GW) of a core network via a cellular wireless network to receiving the data packets from the P-GW via a trusted wireless access network (TWAN), comprises:
communicating, by a TWAN gateway, TWAG, a newly assigned IP address for the TWAN to the mobile entity via an EAP-AKA procedure; receiving, by the TWAN gateway (TWAG), an indication from the mobile entity that an Internet Protocol (IP) interface of the mobile entity is ready to receive the data packets via the TWAN, and in response to receiving the indication, notifying, by the TWAG, the P-GW that the mobile entity is ready to receive the data packets via the TWAN, so that the P-GW, based on the notification, initiates routing of the data packets to the mobile entity via the TWAN.

In related aspects, a wireless communication apparatus may be provided for performing any of the methods and aspects of the methods summarized above. An apparatus may include, for example, a processor coupled to a memory, wherein the memory holds instructions for execution by the processor to cause the apparatus to perform operations as described above. Certain aspects of such apparatus (e.g., hardware aspects) may be exemplified by equipment such as UEs or access terminals or various types used for wireless communications. Similarly, an article of manufacture may be provided, including a non-transitory computer-readable medium holding encoded instructions that when executed by a processor, cause a wireless communications apparatus to perform the methods and aspects of the methods as summarized above.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates an example multiple access wireless communication system in accordance with certain aspects of the present disclosure.
FIG. 2 illustrates a block diagram of an access point and a user terminal in accordance with certain aspects of the present disclosure.
FIG. 3 illustrates various components that may be utilized in a wireless device in accordance with certain aspects of the present disclosure.
FIG. 4 illustrates an example multi-mode mobile station, in accordance with certain aspects of the present disclosure.
FIG. 5 illustrates an example architecture for a wireless local area network (WLAN) and a 3GPP access interworking with non seamless mobility.
FIG. 6 illustrates an example architecture for a wireless local area network (WLAN) and a 3GPP access interworking with seamless mobility.
FIG. 7 illustrates a sequence of call flows for a use case of seamless handover from a 3GPP access network to a WLAN (seamless mobility).
FIG. 8 illustrates a methodology for seamless handover from a 3GPP access network to a WLAN, for performance by a mobile entity or the like.
FIG. 9 illustrates a terminal apparatus for seamless handover from a 3GPP access network to a WLAN, according to the methodology of FIG. 8.
FIG. 10 illustrates a methodology for supporting seamless handover from a 3GPP access network to a WLAN, for performance by a Trusted WLAN Gateway (TWAG) or the like.
FIG. 11 illustrates a TWAG apparatus for supporting seamless handover from a 3GPP access network to a WLAN, according to the methodology of FIG. 10.

### DETAILED DESCRIPTION

The word "exemplary" is used herein to mean "serving as an example, instance, or illustration." Any aspect described herein as "exemplary" is not necessarily to be construed as preferred or advantageous over other aspects.

In an integrated network, the same core network entity, such as a packet data network gateway (P-GW), may handle data for a multimode terminal receiving data over two or more different networks. Such different networks may include, for example, 3GPP and WLAN. Some use cases may call for a session to be handed over from 3GPP to WLAN, such as when a mobile entity moves into a coverage area of a WLAN that is part of the integrated network. In such cases, the integrated network may automatically hand the mobile terminal over from 3GPP or other cellular network to the WLAN, to provide seamless mobility between networks.

However, the P-GW may inadvertently initiate a handover before or after the mobile entity is ready to receive data over the WLAN. For example, the mobile entity may require an unknown amount of time to make its WLAN interface ready to receive data. If the P-GW hands the data over to the WLAN too early, the mobile entity will be unable to receive it and will lose data. If the P-GW hands over too late, the mobile entity may have already disconnected from the 3GPP access network and will lose data. In cases of minor timing error, lower layers may recover data losses. In addition, the PG-W may reduce timing error by setting a timer once the mobile entity enters the WLAN area and requests coverage. The timer may be set to an average or expected lag required for the mobile entity to be ready to receive WLAN data. These solutions, however, may not be optimal.

There is therefore described in more detail herein methods, apparatus and systems for executing a handover from 3GPP to WLAN of an integrated 3GPP/WLAN network, at a more precise time at which the mobile entity is ready to receive data via the WLAN and before the 3GPP session is terminated.

### AN EXAMPLE WIRELESS COMMUNICATION SYSTEM

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), CDMA2000, etc. UTRA includes Wideband-CDMA (W-CDMA) and Low Chip Rate (LCR). CDMA2000 covers IS-2000, IS-95, and IS-856 standards. A TDMA network may implement a radio technology such as Global System for Mobile Communications (GSM). An OFDMA network may implement a radio technology such as Evolved UTRA (E-UTRA), IEEE 802.11 (WiFi or WLAN), IEEE 802.16, IEEE 802.20, Flash-OFDM®, etc. UTRA, E-UTRA, and GSM are part of Universal Mobile Telecommunication System (UMTS). Long Term Evolution (LTE) is a release of UMTS that uses E-UTRA. UTRA, E-UTRA, GSM, UMTS, and LTE are described in documents from an organization named "3rd Generation Partnership Project" (3GPP). CDMA2000 is described in documents from an organization named "3rd Generation Partnership Project 2" (3GPP2).

Single carrier frequency division multiple access (SC-FDMA) is a transmission technique that utilizes single carrier modulation at a transmitter side and frequency domain equalization at a receiver side. The SC-FDMA has similar performance and essentially the same overall complexity as those of OFDMA system. However, SC-FDMA signal has lower peak-to-average power ratio (PAPR) because of its inherent single carrier structure. The SC-FDMA has drawn great attention, especially in the uplink communications where lower PAPR greatly benefits the mobile terminal in terms of transmit power efficiency. SC-FDMA is an adopted uplink multiple access scheme in the 3GPP LTE and the Evolved UTRA.

An access point ("AP") may comprise, be implemented as, or known as NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), Wireless Base Station, Wireless Access Point, WiFi Hot Spot, or some other terminology.

An access terminal ("AT") may comprise, be implemented as, or known as an access terminal, a subscriber station, a subscriber unit, a mobile station, a remote station, a remote terminal, a user terminal, a user agent, a user device, user equipment, a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects disclosed herein may be incorporated into a phone (e.g., a cellular phone or smart phone), a computer (e.g., a laptop), a portable communication device, a portable computing device (e.g., a personal data assistant), an entertainment device (e.g., a music or video device, or a satellite radio), a global positioning system device, or any other suitable device that is configured to communicate via a wireless or wired medium. In some aspects, the node is a wireless node. Such wireless node may provide, for example, connectivity for or to a network (e.g., a wide area network such as the Internet or a cellular network) via a wired or wireless communication link.

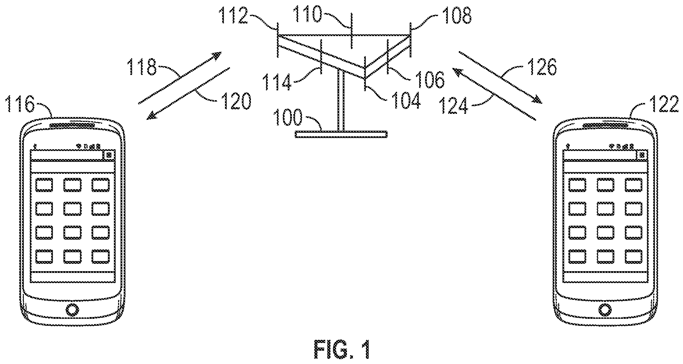

Referring to FIG. 1, a multiple access wireless communication system according to one aspect is illustrated in which procedures described for reducing the time to begin acquisition of wireless networks may be performed. An access point 100 (AP) may include multiple antenna groups, one group including antennas 104 and 106, another group including antennas 108 and 110, and an additional group including antennas 112 and 114. In FIG. 1, only two antennas are shown for each antenna group, however, more or fewer antennas may be utilized for each antenna group. Access terminal 116 (AT) may be in communication with antennas 112 and 114, where antennas 112 and 114 transmit information to access terminal 116 over forward link 120 and receive information from access terminal 116 over reverse link 118. Access terminal 122 may be in communication with antennas 106 and 108, where antennas 106 and 108 transmit information to access terminal 122 over forward link 126 and receive information from access terminal 122 over reverse link 124. In a FDD system, communication links 118, 120, 124, and 126 may use different frequency for communication. For example, forward link 120 may use a different frequency than the frequency used by reverse link 118.

Each group of antennas and/or the area in which they are designed to communicate is often referred to as a sector of the access point. In one aspect of the present disclosure, each antenna group may be designed to communicate to access terminals in a sector of the areas covered by access point 100.

In communication over forward links 120 and 126, the transmitting antennas of access point 100 may utilize beamforming in order to improve the signal-to-noise ratio of forward links for the different access terminals 116 and 122. Also, an access point using beamforming to transmit to access terminals scattered randomly through its coverage causes less interference to access terminals in neighboring cells than an access point transmitting through a single antenna to all its access terminals.

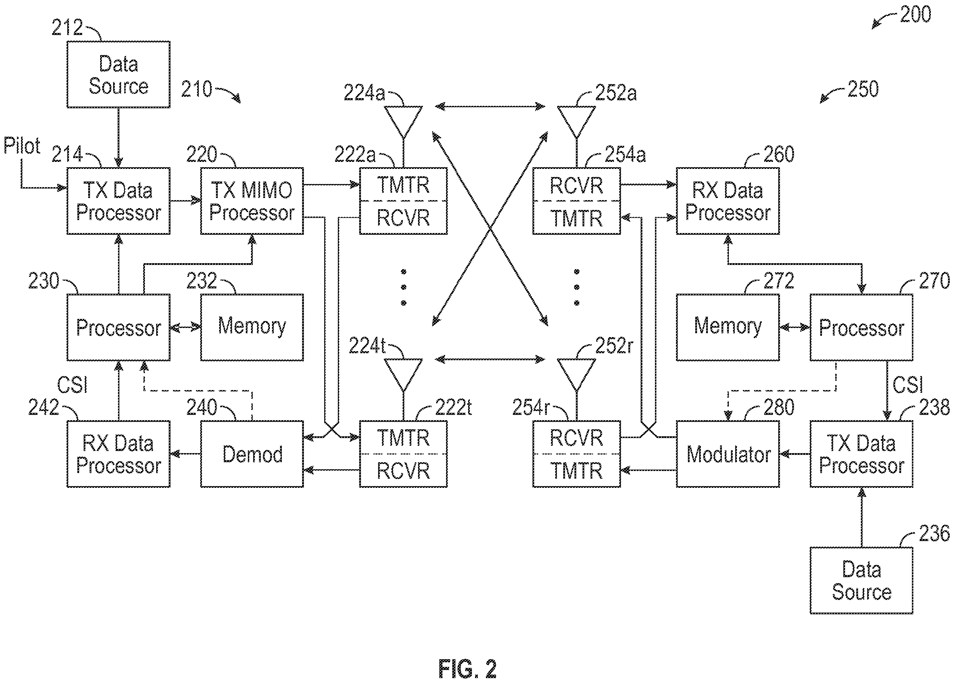

FIG. 2 illustrates a block diagram of an aspect of a transmitter system 210 (also known as the access point) and a receiver system 250 (also known as the access terminal) in a multiple-input multiple-output (MIMO) system 200. At the transmitter system 210, traffic data for a number of data streams is provided from a data source 212 to a transmit (TX) data processor 214.

In one aspect of the present disclosure, each data stream may be transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by processor 230. Memory 232 may store data and software for the transmitter system 210.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain aspects of the present disclosure, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals may be received by *N_{R}* antennas 252a through 252r and the received signal from each antenna 252 may be provided to a respective receiver (RCVR) 254a through 254r. Each receiver 254 may condition (e.g., filters, amplifies, and downconverts) a respective received signal, digitize the conditioned signal to provide samples, and further process the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 may be complementary to that performed by TX MIMO processor 220 and TX data processor 214 at transmitter system 210.

A processor 270 periodically determines which pre-coding matrix to use. Processor 270 formulates a reverse link message comprising a matrix index portion and a rank value portion. Memory 272 may store data and software for the receiver system 250. The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights, and then processes the extracted message.

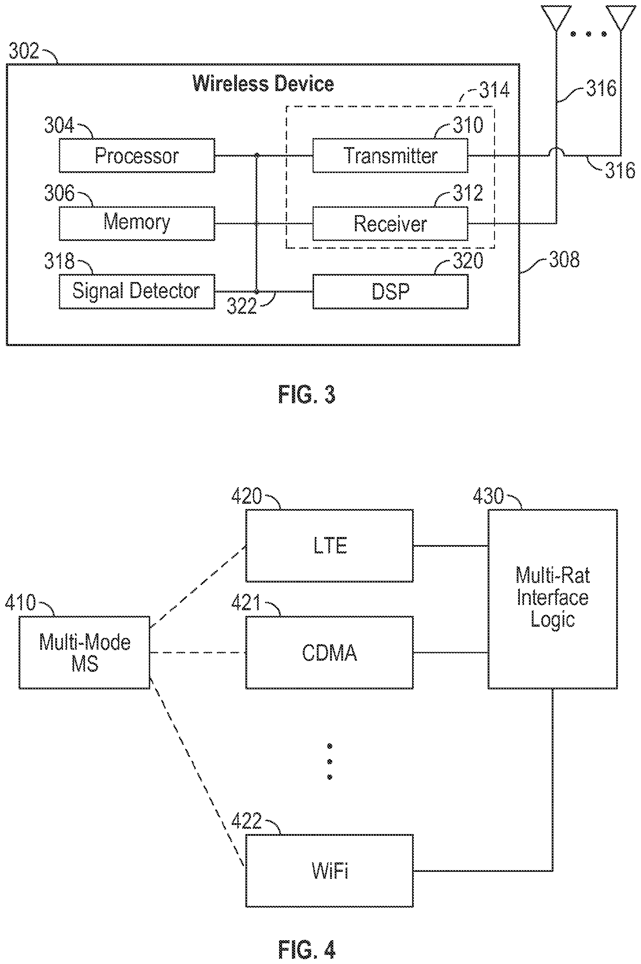

FIG. 3 illustrates various components that may be utilized in a wireless device 302 that may be employed within the wireless communication system illustrated in FIG. 1. The wireless device 302 is an example of a device that may be configured to implement the various methods described herein. The wireless device 302 may be a base station 100 or any of user terminals 116 and 122.

The wireless device 302 may include a processor 304 that controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

In order to expand the services available to subscribers, some MSs may support communications with multiple radio access technologies (RATs). For example, as illustrated in FIG. 4, a multi-mode MS 410 may support LTE for broadband data services and code division multiple access (CDMA) for voice services. Illustratively, LTE is shown as a first RAT 420, CDMA is shown as a second RAT 421, and Wi-Fi is shown as a third RAT 422).

In certain applications, multi-RAT interface logic 430 may be used to exchange information between both long-range and short-range RATs. This may enable a network provider to control how (through which RAT) an end user of the multi-mode MS 410 actually connects to the network. The interface logic 430 may, for example, support local IP connectivity or IP connectivity to a core network.

For example, a network provider may be able to direct the multi-mode MS to connect to the network via short-range RAT, when available. This capability may allow a network provider to route traffic in a manner that eases congestion of particular air resources. In effect, the network provider may use short-range RATs to distribute some air traffic (of a long-range RAT) into a wireline network or to distribute some air traffic from a congested wireless network to a less congested wireless network. The traffic may be re-routed from the short-range RAT when conditions mandate, such as when a mobile user increases speed to a certain level not suitable for a short-range RAT.

Further, since long-range RATs are typically designed to provide service over several kilometers, the power consumption of transmissions from a multi-mode MS when using a long-range RAT is non-trivial. In contrast, short-range RATs (e.g., Wi-Fi) are designed to provide service over several hundred meters. Accordingly, utilizing a short-range RAT when available may result in less power consumption by the multi-mode MS 410 and, consequently, longer battery life.

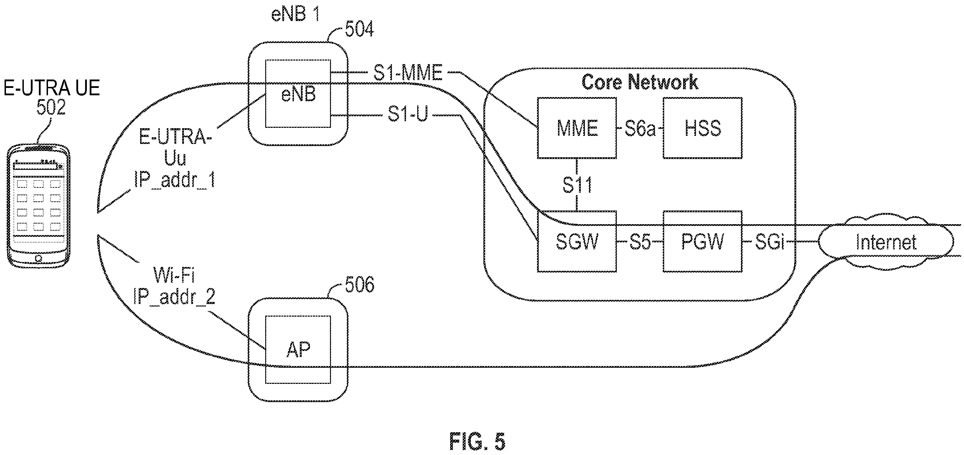

FIG. 5 illustrates an example architecture for a wireless local area network (WLAN) and a 3GPP access interworking with non-seamless mobility. In such an architecture, a user equipment (UE) 502 may use different Internet protocol (IP) addresses at eNB 1 504 and WLAN AP 506.

The UE 502 may use separate packet data network (PDN) connections. The data planes for WLAN and 3GPP are essentially independent, and there is no session continuity (e.g., mobility support for the WLAN). In other words, the UE 502 may find a WLAN AP independently (e.g., with no assistance from the 3GPP access network), which may be inefficient. A UE may become aware of WLAN APs by performing scanning procedures as specified in 802.11.

With regards to a radio access network (RAN), there may be no interface between the AP and the BS, as illustrated in FIG. 5. In such an arrangement, there is no neighbor information exchanged over a backhaul. However, in the case of a collocated AP and BS, 802.11k, 802.11u, and Hotspot 2.0 information on the AP may be known in the BS (e.g., via a backhaul link).

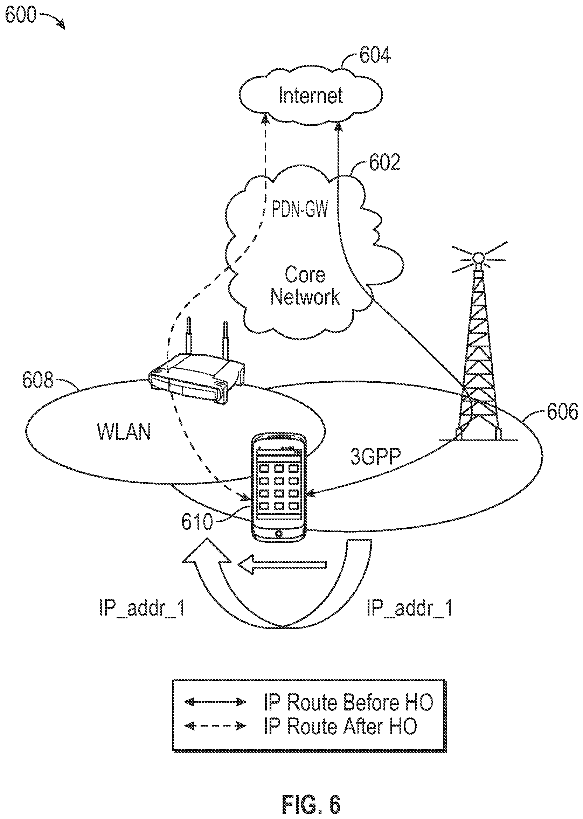

With the foregoing as context, and referring to FIG. 6, the present disclosure is concerned with seamless handover from a 3GPP access network 606 to a WLAN network 608, wherein the same core network 602 and P-GW service both the 3GPP access network and WLAN network for access to the Internet 604. The WLAN 608 and 3GPP access network 606 may be regarded as an integrated system 600. In this context, 3GPP may be, or may include, an LTE or UMTS access network.

A mobile entity 610 may be equipped with 3GPP and WLAN hardware and/or software, providing capabilities for connecting to both networks 606, 608. If integrated WLAN 608 is available, the entity 610 will typically switch to WLAN from 3GPP. In integrated WLAN scenarios such as the illustrated system 600, data traffic may be transmitted to and from the mobile entity 610 via WLAN, while still going through the same operator's core network 602 to Internet 604. Hence, the same PDN gateway may serve both pathways via 3GPP access network 606 and WLAN 608. Because the same PDN-GW is the IP anchor, the mobile entity 610 may keep the same IP address in WLAN 608 as the one that was used while connected via 3GPP access network 606.

Handover from 3GPP to WLAN may present certain challenges. For example, the time when the data path is switched in the PDN-GW from 3GPP access to WLAN access needs to be properly determined. The PDN-GW does not necessarily know when the IP interface configuration over WLAN access is complete in the UE so that the PDN-GW can switch the data path, i.e. stop routing packets to the UE via 3GPP access and start routing packets via WLAN. If the PDN-GW starts routing packets to the UE before the IP interface over WLAN is ready in the UE, some downlink (DL) packets over WLAN will be lost. In addition, if the PDN-GW starts routing packets to the UE after IP interface over WLAN is ready in the UE, and drops 3GPP too soon, then some DL packets over 3GPP will be lost

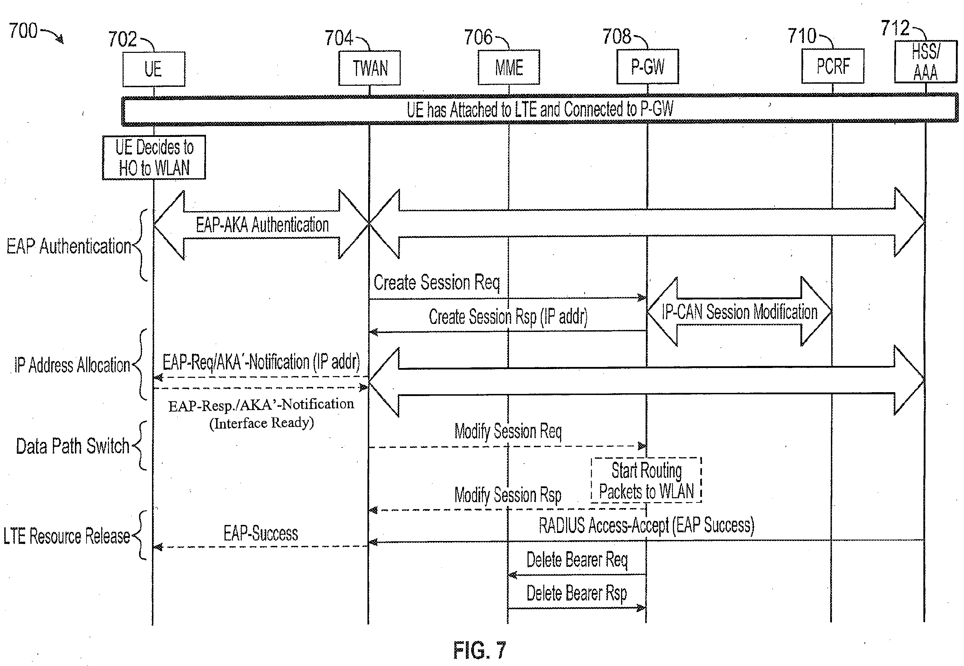

FIG 7 illustrates a call flow 700 for optimizing 3GPP to WLAN handover to reduce packet loss. The WLAN is represented by a trusted wireless access network (TWAN); the TWAN may be serviced by a gateway entity called at TWAN Gateway or TWAG. The term "TWAG" may therefore sometimes be used interchangeably with "TWAN" in the discussion below. The mobile entity/UE 702 sends an indication to the TWAG 704 when the IP interface over WLAN is ready. Upon receiving the indication, TWAG 704 initiates Session Modification procedure with the PDN-GW 708. Other core network elements include the Mobility Management Entity (MME) 706, Policy and Charging Rules Function (PCRF) 710 and Home Subscriber Server (HSS)/ Authentication, Authorizing and Accounting server (AAA) 712.

Initially, the UE may provide an indication that IP over WLAN interface is ready. The TWAG 704 may communicate the assigned IP address for the WLAN to the UE via an EAP-AKA' procedure. In an aspect, the assigned IP address for the UE 702 may be included as an information element inside the EAP-Request/AKA'-Notification message sent from TWAN to UE.

In response, the UE sets out to configure the new IP interface on WLAN with the newly assigned IP address. This process takes some time, during which the 32716-00598 data is still sent to the UE by the network via 3GPP access. When the IP via WLAN interface is ready the UE 702 may indicate this to TWAG 704 by one of the following two ways: (1) Explicitly: by including specific information element inside the EAP-Response/AKA'-Notification message or by another EAP or non-EAP message; or (2) Implicitly: by waiting to send the EAP-Response/AKA'-Notification message until the IP over WLAN interface is ready. In implicit notification, there is a prior understanding between the UE and TWAN that the EAP-Response/AKA'-Notification message is not sent until the IP over WLAN interface is ready.

Data path switch trigger. After receiving the indication from the UE 702 that the IP interface over WLAN is ready, TWAG 704 may initiate the session modification procedure to P-GW to switch the data path from 3GPP to WLAN. PDN-GW may use the Session Mod Request from TWAN as the trigger for the data path switch.

EAP message flow between TWAN and UE. Logically, the EAP protocol messages described previously are exchanged between the UE and the TWAN. In terms of the actual route followed, the EAP messages are sent via authentication, authorization and accounting (AAA) server in both directions: TWAN -> AAA -> UE and UE -> AAA -> TWAN

When the EAP messages are sent between AAA server and the UE they pass transparently via TWAN. TWAN may play the role of a pass-through authenticator in this case, per conventional practice.

The UE may then determine that the IP interface over WLAN is ready and send an indication to the TWAN that IP interface over WLAN is ready upon handover from 3GPP access. The interface ready indication can be explicit or implicit. If implicit, the UE includes the logic to hold on to sending the EAP-Response/AKA-Notification message until the IP interface is ready. If explicit, the UE may add specific "interface-ready" information element to the EAP-Response/AKA-Notification message.

The TWAG 704, upon receiving the indication from the UE that the IP interface is ready, sends the indication to the PDN-GW 708 to switch the data path. The TWAN may include the logic to detect and understand the indication.

As noted above, the IP address may also be assigned to the UE via EAP protocol. For example, the IP address may be assigned as an information element inside the EAP-Request/AKA'-Notification message. The IP address may be, for example, an address per IPv4 or IPv6 protocols. An IPv6 address can be the IPv6 prefix, IPv6 interface identifier (ID), or both.

The foregoing call flow may provide certain benefits. For example, the handover from 3GPP to WLAN is optimized by reducing the possibility of the data path switch happening too early or too late. Consequently, the overall effect is that the user will see more seamless handover, and less data interruption during handover
In view of exemplary systems shown and described herein, methodologies that may be implemented in accordance with the disclosed subject matter, will be better appreciated with reference to various flow charts. While, for purposes of simplicity of explanation, methodologies are shown and described as a series of acts/blocks, it is to be understood and appreciated that the claimed subject matter is not limited by the number or order of blocks, as some blocks may occur in different orders and/or at substantially the same time with other blocks from what is depicted and described herein. Moreover, not all illustrated blocks may be required to implement methodologies described herein. It is to be appreciated that functionality associated with blocks may be implemented by software, hardware, a combination thereof or any other suitable means (e.g., device, system, process, or component). Additionally, it should be further appreciated that methodologies disclosed throughout this specification are capable of being stored on an article of manufacture to facilitate transporting and transferring such methodologies to various devices. Those skilled in the art will understand and appreciate that a methodology could alternatively be represented as a series of interrelated states or events, such as in a state diagram.

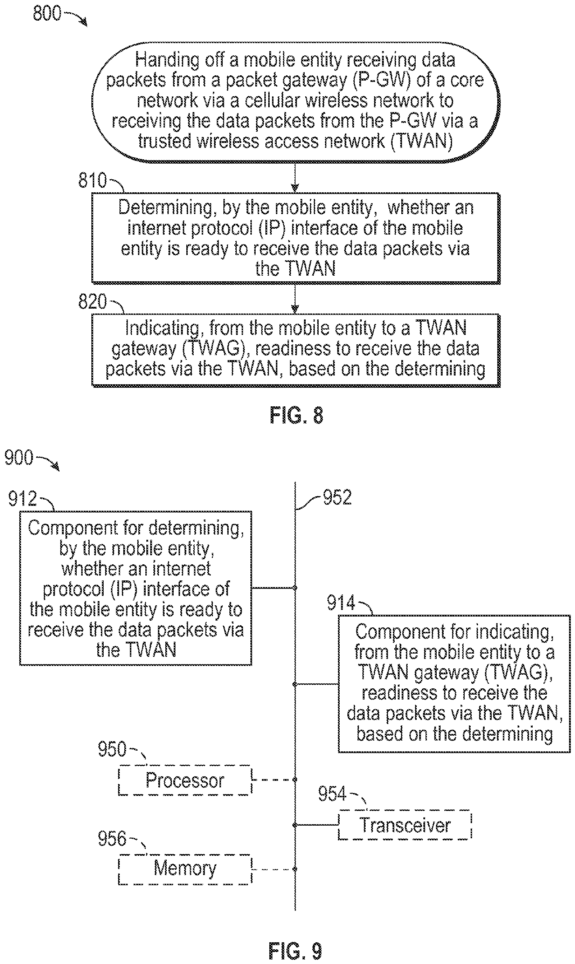

In accordance with one or more aspects of the embodiments described herein, with reference to FIG. 8, there is shown a methodology 800, operable by a wireless device (e.g., mobile entity, a UE, access terminal, or the like) for managing measurement of WLAN parameters, for handing off a mobile entity receiving data packets from a packet gateway (P-GW) of a core network via a cellular wireless network to receiving the data packets from the P-GW via a trusted wireless access network (TWAN). Specifically, the method 800 may include, at 810, determining, by the mobile entity, whether an Internet Protocol (IP) interface of the mobile entity is ready to receive the data packets via the TWAN. The IP interface is ready to receive the data packets when its IP interface is activated and capable of receiving WLAN signals and decoding the signals to obtain the IP data packets. The mobile entity may perform this determination in any suitable manner, for example using an internal readiness algorithm measuring relevant states or data flags of the IP interface and reaching a conclusion based on the measured states or flags. As part of or in parallel to the method, the mobile entity may configure the IP interface to receive the data packets via the TWAN instead of via the cellular wireless network. In an aspect, the cellular wireless network comprises a 3GPP access network.

The method 800 may further include, at 820, indicating, from the mobile entity to a TWAN gateway (TWAG), readiness to receive the data packets via the TWAN, based on the determining. For example, the mobile entity may provide no indication of readiness, or provide a negative indication, until it has determined that the IP interface is ready to receive data from the WLAN. Then, once it has determined that the interface is ready, it may immediately provide the indication of readiness.

There are further optional operations or aspects that may be performed in conjunction with the method 800 for discontinuous reception (DRX) operation by a mobile entity of a wireless communications system. These operations are not required to perform the method 800. The method 800 may further include authenticating the mobile entity for access via the TWAN, by communicating with the core network, prior to the determining. For example, the method 800 may perform the authentication using an extensible authentication protocol (EAP) challenge-response message exchange. The authentication may be conventional, for example, using an EAP challenge and response exchange. Authentication of the mobile terminal entering a WLAN coverage area may be one source of delay in enabling readiness of the mobile terminal to receive WLAN data.

The method 800 may further include continuing to receive the data packets via the cellular wireless network at least until the indicating readiness. Accordingly, the handover process may be seamless or unapparent to the end user, because the mobile device receives data in an essentially continuous, uninterrupted process during the handover from the 3GPP access network to the WLAN. In addition, the method 800 may include ceasing to receive the data packets via the cellular wireless network and receiving the data packets via the TWAN, after the indicating readiness. Similarly, the method 800 may include transmitting uplink data packets via the TWAN and ceasing to transmit uplink data packets via the cellular wireless network, after the indicating readiness. Once these operations have occurred, the handover is complete.

The method 800 may further include indicating the readiness by sending a message to the TWAG. For example, sending the message may include sending an EAP response to an EAP notification message received from the TWAG. In addition, the method 800 may include configuring the message to be a message selected from one of (either of): a message including a readiness indicator for explicit notification, and a message lacking any readiness indicator for implicit notification. In another aspect, the method may include receiving the EAP notification message comprising an IP address of the mobile entity. The IP address may be provided as an information element inside an EAP-Request/AKA'-Notification message. In separate aspects, the IP address can be IPv4 or IPv6, wherein an IPv6 address can be the IPv6 prefix, IPv6 interface identifier (ID), or both.

In accordance with one or more aspects of the embodiments described herein, there are provided devices and apparatuses for handing off a mobile entity receiving data packets from a packet gateway (P-GW) of a core network via a cellular wireless network to receiving the data packets from the P-GW via a trusted wireless access network (TWAN), as described above with reference to FIG. 8.

With reference to FIG. 9, there is provided an exemplary apparatus 900 that may be configured as a wireless device, or as a processor or similar device/component for use within. The apparatus 900 may include functional blocks that can represent functions implemented by a processor, software, or combination thereof (e.g., firmware). For example, apparatus 900 may include an electrical component, module or means 912 for determining, by the mobile entity, whether an Internet Protocol (IP) interface of the mobile entity is ready to receive the data packets via the TWAN. Said means may include a processor executing a more detailed algorithm for performing the determining operation.

The apparatus 900 may include a component, module or means 914 for indicating, from the mobile entity to a TWAN gateway (TWAG), readiness to receive the data packets via the TWAN, based on the determining. Said means may include a processor executing a more detailed algorithm for performing the second determining operation.

In related aspects, the apparatus 900 may optionally include a processor component 950 having at least one processor, in the case of the apparatus 900 configured as a wireless device (e.g., mobile entity, a UE, access terminal, or the like), rather than as a processor. The processor 950, in such case, may be in operative communication with the components 912-914 via a bus 952 or similar communication coupling. The processor 950 may effect initiation and scheduling of the processes or functions performed by electrical components 912-914.

In further related aspects, the apparatus 900 may include a transceiver component 954 (radio/wireless or wired). A stand alone receiver and/or stand alone transmitter may be used in lieu of or in conjunction with the transceiver 954. The apparatus 900 may optionally include a component for storing information, such as, for example, a memory device/component 956. The computer readable medium or the memory component 956 may be operatively coupled to the other components of the apparatus 900 via the bus 952 or the like. The memory component 956 may be adapted to store computer readable instructions and data for effecting the processes and behavior of the components 912-914, and subcomponents thereof, or the processor 950, or the methods disclosed herein. The memory component 956 may retain instructions for executing functions associated with the components 912-914. While shown as being external to the memory 956, it is to be understood that the components 912-914 can exist within the memory 956. It is further noted that the components in FIG. 9 may comprise processors, electronic devices, hardware devices, electronic sub-components, logical circuits, memories, software codes, firmware codes, etc., or any combination thereof.

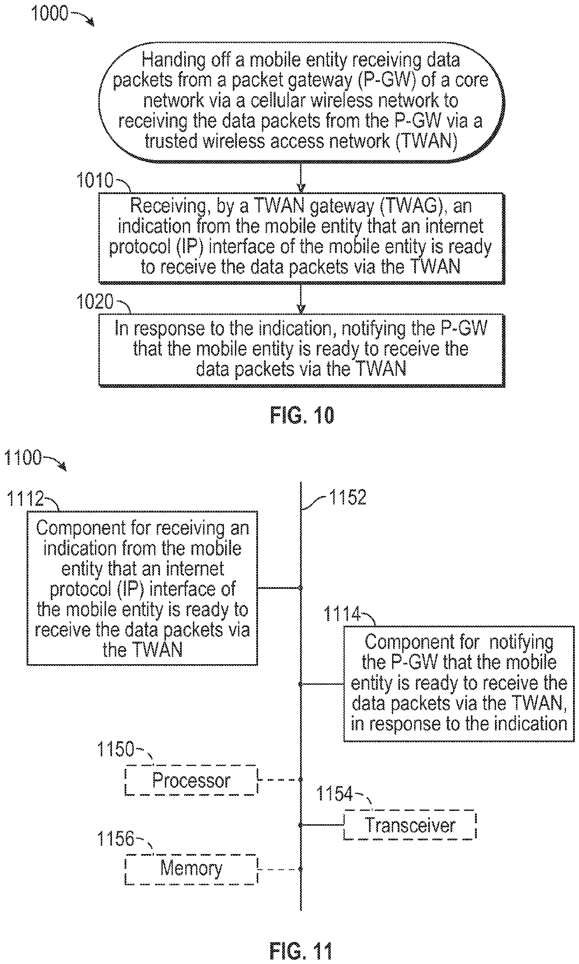

In accordance with one or more aspects of the embodiments described herein, with reference to FIG. 10, there is shown a methodology 1000, operable by a network entity (e.g., a packet data network gateway, or the like) for handing off a mobile entity receiving data packets from the packet gateway (P-GW) of a core network via a cellular wireless network to receiving the data packets from the P-GW via a trusted wireless access network (TWAN). Specifically, the method 1000 may involve, at 1010, receiving, by a TWAN gateway (TWAG), an indication from the mobile entity that an Internet Protocol (IP) interface of the mobile entity is ready to receive the data packets via the TWAN. In addition, the method 1000 may include, at 1020, in response to the indication, notifying the P-GW that the mobile entity is ready to receive the data packets via the TWAN. The P-GW, based on the notification, may initiate routing of the data packets to the mobile entity via the TWAN.

The method 1000 may further include authenticating the mobile entity for access via the TWAN, by communicating with the mobile entity and the core network, prior to the receiving. For example, the authenticating may include using an extensible authentication protocol (EAP) challenge-response message exchange. In a related aspect, the method 1000 may include receiving the data packets from the P-GW and sending the data packets to the mobile entity from the TWAG, after the notifying.

The method 1000 may further include receiving the indication at least in part by receiving a message from the mobile entity. In addition, the method 1000 may further include receiving the message from the mobile entity at least in part by receiving an extensible authentication protocol (EAP) response to an EAP notification message.

In alternative aspects, the method 1000 may further include the message from the mobile entity is received as one of (either of): a message including a readiness indicator for explicit notification, and a message lacking any readiness indicator for implicit notification. In another aspect of the method 1000, the EAP notification message sent to the mobile entity may include an IP address of the mobile entity; thus, an IP address may be assigned to the UE via EAP protocol. The IP address may be provided as an information element inside an EAP-Request/AKA'-Notification message. In separate aspects, the IP address can be IPv4 or IPv6, wherein an IPv6 address can be the IPv6 prefix, IPv6 interface identifier (ID), or both.

With reference to FIG. 11, there is provided an exemplary apparatus 1100 that may be configured as a network entity, or as a processor or similar device/component for use within a network entity. The apparatus 1100 may include functional blocks that can represent functions implemented by a processor, software, or combination thereof (e.g., firmware). For example, apparatus 1100 may include an electrical component, module or means 1112 for receiving an indication from the mobile entity that an Internet Protocol (IP) interface of the mobile entity is ready to receive the data packets via the TWAN. Said means may include a processor performing a more detailed algorithm for receiving an explicit or implicit indication.

The apparatus 1100 may include an electrical component, module or means 1114 for notifying the P-GW that the mobile entity is ready to receive the data packets via the TWAN, in response to the indication. The P-GW, based on the notification, may initiate routing of the data packets to the mobile entity via the TWAN, for example, by routing to the TWAG. Said means may include a processor performing a more detailed algorithm, for example transmitting protocol messages to the P-GW from the TWAG as diagramed in FIG. 7.

In related aspects, the apparatus 1100 may optionally include a processor component 1150 having at least one processor, in the case of the apparatus 1100 configured as a network entity (e.g., P-GW, etc.), rather than as a processor. The processor 1150, in such case, may be in operative communication with the components 1112-1114 via a bus 1152 or similar communication coupling. The processor 1150 may effect initiation and scheduling of the processes or functions performed by electrical components 1112-1114.

In further related aspects, the apparatus 1100 may include a transceiver component 1154 (radio/wireless or wired). A stand alone receiver and/or stand alone transmitter may be used in lieu of or in conjunction with the transceiver 1154. The apparatus 1100 may optionally include a component for storing information, such as, for example, a memory device/component 1156. The computer readable medium or the memory component 1156 may be operatively coupled to the other components of the apparatus 1100 via the bus 1152 or the like. The memory component 1156 may be adapted to store computer readable instructions and data for effecting the processes and behavior of the components 1112-1114, and subcomponents thereof, or the processor 1150, or the methods disclosed herein. The memory component 1156 may retain instructions for executing functions associated with the components 1112-1114. While shown as being external to the memory 1156, it is to be understood that the components 1112-1114 can exist within the memory 1156. It is further noted that the components in FIG. 11 may comprise processors, electronic devices, hardware devices, electronic sub-components, logical circuits, memories, software codes, firmware codes, etc., or any combination thereof.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in Figures, those operations may have corresponding counterpart means-plus-function components with similar numbering.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of' a list of items refers to any combination of those items, including single members. As an example, "at least one of: *a, b,* or c" is intended to cover: *a, b, c, a-b, a-c, b-c, and a-b-c.*

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage medium may be any available non-transitory medium that can be accessed by a computer. By way of example, and not limitation, such non-transitory computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks hold data encoded magnetically, while discs hold data encoded optically.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

## Claims

1. A method (800) for handing off a mobile entity (702) receiving data packets from a packet gateway (708), P-GW, of a core network via a cellular wireless network to receiving the data packets from the P-GW via a trusted wireless access network, TWAN, the method comprising:
receiving, by the mobile entity, a newly assigned Internet Protocol, IP, address for the TWAN via an EAP-AKA procedure;
in response to receiving the newly assigned IP address, the mobile entity configuring an IP interface on TWAN with the newly assigned IP address;
determining (810), by the mobile entity, whether the IP interface of the mobile entity is ready to receive the data packets via the TWAN; and
indicating (820), from the mobile entity to a TWAN gateway (704), TWAG, readiness to receive the data packets via the TWAN, based on the determining.

2. The method of claim 1, further comprising: authenticating the mobile entity for access via the TWAN, by communicating with the core network, prior to the determining, and optionally
the authenticating is performed using an extensible authentication protocol, EAP, challenge-response message exchange.

3. The method of claim 1, further comprising continuing to receive the data packets via the cellular wireless network at least until the indicating readiness and optionally receiving the data packets via the TWAN and ceasing to receive the data packets via the cellular wireless network, after the indicating readiness, or
transmitting uplink data packets via the TWAN and ceasing to transmit uplink data packets via the cellular wireless network, after the indicating readiness.

4. The method of claim 1, wherein the indicating readiness is performed by sending a message from the mobile entity to the TWAG.

5. The method of claim 4, wherein the message from the mobile entity to the TWAG is selected from: a message including a readiness indicator for explicit notification, and a message lacking any readiness indicator for implicit notification.

6. The method of claim 4, wherein sending the message from the mobile entity to the TWAG comprises sending an extensible authentication protocol, EAP, response to an EAP notification message.

7. The method of claim 6, further comprising receiving, by the mobile entity, the IP address of the mobile entity in the EAP notification message.

8. The method of claim 1, further comprising configuring the IP interface to receive the data packets via the TWAN instead of via the cellular wireless network and optionally
the cellular wireless network comprises a 3GPP access network.

9. An apparatus for handing off a mobile entity (702) receiving data packets from a packet gateway (708), P-GW, of a core network via a cellular wireless network to receiving the data packets from the P-GW via a trusted wireless access network, TWAN; the apparatus comprising:
means for receiving, by the mobile entity, a newly assigned Internet Protocol, IP, address for the TWAN via an EAP-AKA procedure;
in response to receiving the newly assigned IP address, the mobile entity adapted for configuring an IP interface on TWAN with the newly assigned IP address;
means for determining, by the mobile entity, whether an IP interface of the mobile entity is ready to receive the data packets via the TWAN; and
means for indicating, from the mobile entity to a TWAN gateway (704), TWAG, readiness to receive the data packets via the TWAN, based on the determining.

10. A method (1000) for handing off a mobile entity (702) receiving data packets from a packet gateway (708), P-GW of a core network via a cellular wireless network to receiving the data packets from the P-GW via a trusted wireless access network, TWAN, the method comprising:
communicating, by a TWAN gateway (704), TWAG, a newly assigned IP address for the TWAN to the mobile entity via an EAP-AKA procedure;
receiving (1010), by the TWAG, an indication from the mobile entity that an Internet Protocol, IP, interface of the mobile entity is ready to receive the data packets via the TWAN; and
in response to receiving the indication, notifying (1020), by the TWAG, the P-GW that the mobile entity is ready to receive the data packets via the TWAN, so that the P-GW, based on the notification, initiates routing of the data packets to the mobile entity via the TWAN.

11. The method of claim 10, further comprising authenticating the mobile entity for access via the TWAN, by communicating with the mobile entity and the core network, prior to the receiving, and optionally
the authenticating is performed using an extensible authentication protocol, EAP, challenge-response message exchange.

12. The method of claim 10, further comprising receiving the data packets from the P-GW and sending the data packets to the mobile entity from the TWAG, after the notifying.

13. The method of claim 10, wherein receiving the indication comprises receiving a message from the mobile entity, and optionally
the message from the mobile entity is selected from: a message including a readiness indicator for explicit notification, and a message lacking any readiness indicator for implicit notification, or optionally
receiving the message from the mobile entity comprises receiving an extensible authentication protocol, EAP, response to an EAP notification message, and preferably further comprising sending to the mobile entity, an IP address of the mobile entity in the EAP notification message.

14. An apparatus for handing off a mobile entity (702) receiving data packets from a packet gateway (708), P-GW, of a core network via a cellular wireless network to receiving the data packets from the P-GW via a trusted wireless access network, TWAN, comprising:
means for communicating, by a TWAN gateway (704), TWAG, a newly assigned IP address for the TWAN to the mobile entity via an EAP-AKA procedure;
means for receiving, by the TWAG, an indication from the mobile entity that an Internet Protocol, IP interface of the mobile entity is ready to receive the data packets via the TWAN; and
responsive to receiving the indication, means for notifying, by the TWAG, the P-GW that the mobile entity is ready to receive the data packets via the TWAN, so that the P-GW, based on the notification, initiates routing of the data packets to the mobile entity via the TWAN.

15. A computer readable medium comprising instructions which, when executed by a computer, cause the computer to carry out the method of any of claims 1-8, or 10-13.

## Patentansprüche

1. Ein Verfahren (800) zum Durchführen eines Handoffs bzw. zum Übergeben einer Mobileinheit (702), die Datenpakete von einem Paket-Gateway bzw. P-GW (708) eines Kernnetzwerks über ein zellulares Drahtlosnetzwerk empfängt zum Empfangen der Datenpakete von dem P-GW über ein vertrauenswürdiges Drahtloszugriffsnetzwerk bzw. TWAN (TWAN = trusted wireless access network), wobei das Verfahren Folgendes aufweist:
Empfangen, durch die Mobileinheit, einer neu zugewiesenen Internetprotokoll- bzw. IP-Adresse für das TWAN über eine EAP-AKA-Prozedur;
ansprechend auf das Empfangen der neu zugewiesenen IP-Adresse, Konfigurieren, durch die Mobileinheit, einer IP-Schnittstelle in dem TWAN mit der neu zugewiesenen IP-Adresse;
Bestimmen (810), durch die Mobileinheit, ob die IP-Schnittstelle der Mobileinheit bereit ist die Datenpakete über das TWAN zu empfangen; und
Anzeigen (820), von der Mobileinheit gegenüber einem TWAN-Gateway bzw. TWAG (704), einer Bereitschaft zum Empfangen der Datenpakete über das TWAN basierend auf der Bestimmung.

2. Verfahren nach Anspruch 1, das weiter Folgendes aufweist: Authentifizieren der Mobileinheit zum Zugreifen über das TWAN durch Kommunizieren mit dem Kernnetzwerk vor dem Bestimmen, und wobei optional das Authentifizieren durchgeführt wird unter Verwendung eines EAP-Challenge-Response- bzw. EAP-Aufforderung-Antwort-Nachrichtenaustauschs (EAP = extensible authentication protocol).

3. Verfahren nach Anspruch 1, das weiter Fortfahren mit dem Empfangen der Datenpakete über das zellulare Drahtlosnetzwerk bis wenigstens zum Anzeigen der Bereitschaft aufweist und optional Empfangen der Datenpakete über das TWAN und Beenden des Empfangens der Datenpakete über das zellulare Drahtlosnetzwerk nach dem Anzeigen der Bereitschaft, oder
Senden von Uplink- bzw. Aufwärtsstreckendatenpaketen über das TWAN und Beenden des Sendens von Aufwärtsstreckendatenpaketen über das zellulare Drahtlosnetzwerk nach dem Anzeigen der Bereitschaft.

4. Verfahren nach Anspruch 1, wobei das Anzeigen der Bereitschaft durch Senden einer Nachricht von der Mobileinheit an das TWAG durchgeführt wird.

5. Verfahren nach Anspruch 4, wobei die Nachricht von der Mobileinheit an das TWAG ausgewählt ist aus: einer Nachricht, die einen Bereitschaftsindikator zur expliziten Benachrichtigung aufweist und eine Nachricht ohne jeglichen Bereitschaftsindikator zur impliziten Benachrichtigung.

6. Verfahren nach Anspruch 4, wobei das Senden der Nachricht von der Mobileinheit an das TWAG Senden einer EAP-Antwort (EAP = extensible authentication protocol) auf eine EAP-Benachrichtigungsnachricht hin aufweist.

7. Verfahren nach Anspruch 6, das weiter Empfangen, durch die Mobileinheit, der IP-Adresse der Mobileinheit in der EAP-Benachrichtigungsnachricht aufweist.

8. Verfahren nach Anspruch 1, das weiter Konfigurieren der IP-Schnittstelle zum Empfangen der Datenpakete über das TWAN anstatt über das zellulare Drahtlosnetzwerk aufweist und wobei optional das zellulare Drahtlosnetzwerk ein 3GPP-Zugriffsnetzwerk aufweist.

9. Eine Vorrichtung zum Durchführen eines Handoff bzw. zum Übergeben einer Mobileinheit (702), die Datenpakete von einem Paket-Gateway bzw. P-GW (708) eines Kernnetzwerks über ein zellulares Drahtlosnetzwerk empfängt zum Empfangen der Datenpakete von dem P-GW über ein vertrauenswürdiges Drahtloszugriffsnetzwerk bzw. TWAN (TWAN = trusted wireless access network), wobei die Vorrichtung Folgendes aufweist:
Mittel zum Empfangen, durch die Mobileinheit, einer neu zugewiesenen Internetprotokoll- bzw. IP-Adresse für das TWAN über eine EAP-AKA-Prozedur;
wobei ansprechend auf das Empfangen der neu zugewiesenen IP-Adresse, die Mobileinheit ausgelegt ist zum Konfigurieren einer IP-Schnittstelle in dem TWAN mit der neu zugewiesenen IP-Adresse;
Mittel zum Bestimmen, durch die Mobileinheit, ob eine IP-Schnittstelle der Mobileinheit bereit ist die Datenpakete über das TWAN zu empfangen; und
Mittel zum Anzeigen, von der Mobileinheit gegenüber einem TWAN-Gateway bzw. TWAG (TWAG = TWAN gateway) (704), einer Bereitschaft zum Empfangen der Datenpakete über das TWAN basierend auf dem Bestimmen.

10. Ein Verfahren (1000) zum Durchführen eines Handoff bzw. zum Übergeben einer Mobileinheit (702), die Datenpakete von einem Paket-Gateway bzw. P-GW (708) eines Kernnetzwerks über ein zellulares Drahtlosnetzwerk empfängt zum Empfangen der Datenpakete von dem P-GW über ein vertrauenswürdiges Drahtloszugriffsnetzwerk bzw. TWAN (TWAN = trusted wireless access network), wobei das Verfahren Folgendes aufweist:
Kommunizieren, durch ein TWAN-Gateway bzw. TWAG (704), einer neu zugewiesenen IP-Adresse für das TWAN an die Mobileinheit über eine EAP-AKA-Prozedur;
Empfangen (1010), durch das TWAG, einer Anzeige von der Mobileinheit, dass eine Internetprotokoll- bzw. IP-Schnittstelle der Mobileinheit bereit ist zum Empfangen der Datenpakete über das TWAN; und
ansprechend auf das Empfangen der Anzeige, Benachrichtigen (1020), durch das TWAG, des P-GW, dass die Mobileinheit bereit ist zum Empfangen der Datenpakete über das TWAN, so dass das P-GW basierend auf der Benachrichtigung Leiten der Datenpakete an die Mobileinheit über das TWAN initiiert.

11. Verfahren nach Anspruch 10, das weiter Authentifizieren der Mobileinheit für Zugriff über das TWAN aufweist durch Kommunizieren mit der Mobileinheit und dem Kernnetzwerk vor dem Empfangen, und wobei optional
das Authentifizieren durchgeführt wird unter Verwendung eines EAP-Challenge-Response- bzw. EAP-Aufforderung-Antwort-Nachrichtenaustauschs (EAP = extensible authentication protocol).

12. Verfahren nach Anspruch 10, das weiter Empfangen der Datenpakete von dem P-GW und Senden der Datenpakete an die Mobileinheit von dem TWAG nach dem Benachrichtigen aufweist.

13. Verfahren nach Anspruch 10, wobei das Empfangen der Anzeige Empfangen einer Nachricht von der Mobileinheit aufweist, und wobei optional die Nachricht von der Mobileinheit ausgewählt wird aus: einer Nachricht, die einen Bereitschaftsindikator zur expliziten Benachrichtigung aufweist und einer Nachricht ohne jeglichen Bereitschaftsindikator zur impliziten Benachrichtigung, oder wobei optional
das Empfangen der Nachricht von der Mobileinheit Empfangen einer EAP-Antwort (EAP = extensible authentication protocol) auf eine EAP-Benachrichtigungsnachricht hin aufweist, und das weiter vorzugsweise Senden, an die Mobileinheit, einer IP-Adresse der Mobileinheit in der EAP-Benachrichtigungsnachricht aufweist.

14. Eine Vorrichtung zum Durchführen eines Handoffs bzw. zum Übergeben einer Mobileinheit (702), die Datenpakete von einem Paket-Gateway bzw. P-GW (708) eines Kernnetzwerks über ein zellulares Drahtlosnetzwerk empfängt zum Empfangen der Datenpakete von dem P-GW über ein vertrauenswürdiges Drahtloszugriffsnetzwerk bzw. TWAN (TWAN = trusted wireless access network), die Folgendes aufweist:
Mittel zum Kommunizieren, durch ein TWAN-Gateway bzw. TWAG (704), einer neu zugewiesenen IP-Adresse für das TWAN an die Mobileinheit über eine EAP-AKA-Prozedur;
Mittel zum Empfangen, durch das TWAG, einer Anzeige von der Mobileinheit, dass eine Internetprotokoll- bzw. IP-Schnittstelle der Mobileinheit bereit ist zum Empfangen der Datenpakete über das TWAN; und
ansprechend auf das Empfangen der Anzeige, Mittel zum Benachrichtigen, durch das TWAG, des P-GW, dass die Mobileinheit bereit ist zum Empfangen der Datenpakete über das TWAN, so dass das P-GW basierend auf der Benachrichtigung Leiten der Datenpakete an die Mobileinheit über das TWAN initiiert.

15. Ein computerlesbares Medium, das Instruktionen aufweist, die, wenn sie durch einen Computer ausgeführt werden, den Computer veranlassen zum Durchführen des Verfahrens nach einem der Ansprüche 1-8 oder 10-13.

## Revendications

1. Procédé (800) pour transférer une entité mobile (702) recevant des paquets de données à partir d'une passerelle de paquets (708), P-GW, d'un réseau central par l'intermédiaire d'un réseau sans fil cellulaire pour recevoir des paquets de données provenant du P-GW par l'intermédiaire d'un réseau d'accès sans fil de confiance, TWAN, le procédé comprenant :
recevoir, par l'entité mobile, une adresse du protocole Internet, IP, nouvellement attribuée pour le TWAN par l'intermédiaire d'une procédure EAP-AKA ;
en réponse à la réception de l'adresse IP nouvellement attribuée, configurer par l'entité mobile une interface IP sur le TWAN avec l'adresse IP nouvellement attribuée ;
déterminer (810), par l'entité mobile, si l'interface IP de l'entité mobile est prête à recevoir les paquets de données par l'intermédiaire du TWAN ; et
indiquer (820), à partir de l'entité mobile à une passerelle TWAN (704), TWAG, un état prêt à recevoir les paquets de données par l'intermédiaire du TWAN, sur la base de la détermination.

2. Procédé selon la revendication 1, comprenant en outre une authentification de l'entité mobile pour un accès par l'intermédiaire du TWAN, en communiquant avec le réseau central, avant la détermination, et optionnellement
l'authentification est réalisée en utilisant un échange de messages interrogation-réponse d'un protocole d'authentification extensible, EAP.

3. Procédé selon la revendication 1, comprenant en outre le fait de continuer à recevoir les paquets de données par l'intermédiaire du réseau sans fil cellulaire au moins jusqu'à l'indication d'un état prêt et optionnellement la réception des paquets de données par l'intermédiaire du TWAN, et arrêter de recevoir les paquets de données par l'intermédiaire du réseau sans fil cellulaire, après l'indication d'un état prêt, ou
émettre des paquets de données en liaison montante par l'intermédiaire du TWAN et arrêter d'émettre des paquets de données en liaison montante par l'intermédiaire du réseau sans fil cellulaire, après l'indication d'un état prêt.

4. Procédé selon la revendication 1, dans lequel l'indication d'un état prêt est réalisée en envoyant un message à partir de l'entité mobile au TWAG.

5. Procédé selon la revendication 4, dans lequel le message provenant de l'entité mobile adressé au TWAG est choisi parmi : un message comprenant un indicateur d'état prêt pour une notification explicite, et un message manquant de tout indicateur d'état prêt pour une notification implicite.

6. Procédé selon la revendication 4, dans lequel l'envoi du message à partir de l'entité mobile au TWAG comprend l'envoi d'une réponse du protocole d'authentification extensible, EAP, à un message de notification EAP.

7. Procédé selon la revendication 6, comprenant en outre la réception, par l'entité mobile, de l'adresse IP de l'entité mobile dans le message de notification EAP.

8. Procédé selon la revendication 1, comprenant en outre une configuration de l'interface IP pour recevoir les paquets de données par l'intermédiaire du TWAN au lieu de par l'intermédiaire du réseau sans fil cellulaire, et optionnellement
le réseau sans fil cellulaire comprend un réseau d'accès 3GPP.

9. Dispositif pour transférer une entité mobile (702) recevant des paquets de données à partir d'une passerelle de paquets (708), P-GW, d'un réseau central par l'intermédiaire d'un réseau sans fil cellulaire pour recevoir les paquets de données à partir du P-GW par l'intermédiaire d'un réseau d'accès sans fil de confiance, TWAN, le dispositif comprenant :
des moyens pour recevoir, par l'entité mobile, une adresse du protocole Internet, IP, nouvellement attribuée pour le TWAN par l'intermédiaire d'une procédure EAP-AKA ;
en réponse à la réception de l'adresse IP nouvellement attribuée, l'entité mobile est adaptée à configurer une interface IP sur le TWAN avec l'adresse IP nouvellement attribuée ;
des moyens pour déterminer, par l'entité mobile, si l'interface IP de l'entité mobile est prête à recevoir les paquets de données par l'intermédiaire du TWAN ; et
des moyens pour indiquer, à partir de l'entité mobile à une passerelle TWAN (704), TWAG, un état prêt à recevoir les paquets de données par l'intermédiaire du TWAN, sur la base de la détermination.

10. Procédé (1000) pour transférer une entité mobile (702) recevant des paquets de données à partir d'une passerelle de paquets (708), P-GW, d'un réseau central par l'intermédiaire d'un réseau sans fil cellulaire pour recevoir les paquets de données à partir du P-GW par l'intermédiaire d'un réseau d'accès sans fil de confiance, TWAN, le procédé comprenant :
communiquer, par une passerelle TWAN (704), TWAG, une adresse IP nouvellement attribuée pour le TWAN à l'entité mobile par l'intermédiaire d'une procédure EAP-AKA ;
recevoir (1010), par le TWAG, une indication provenant de l'entité mobile indiquant qu'une interface du protocole Internet, IP de l'entité mobile est prête à recevoir les paquets de données par l'intermédiaire du TWAN ; et
en réponse à la réception de l'indication, notifier (1020), par le TWAG, au P-GW que l'entité mobile est prête à recevoir les paquets de données par l'intermédiaire du TWAN, de sorte que le P-GW, sur la base de la notification, lance un routage des paquets de données vers l'entité mobile par l'intermédiaire du TWAN.

11. Procédé selon la revendication 10, comprenant en outre une authentification de l'entité mobile pour un accès par l'intermédiaire du TWAN, en communiquant avec l'entité mobile et le réseau central, avant la réception, et optionnellement
l'authentification est réalisée en utilisant un échange de messages interrogation-réponse d'un protocole d'authentification extensible, EAP.

12. Procédé selon la revendication 10, comprenant en outre la réception des paquets de données à partir du P-GW et l'envoi des paquets de données à l'entité mobile à partir du TWAG, après la notification.

13. Procédé selon la revendication 10, dans lequel la réception de l'indication comprend la réception d'un message à partir de l'entité mobile, et optionnellement
le message provenant de l'entité mobile est choisi parmi : un message comprenant un indicateur d'état prêt pour une notification explicite, et un message manquant de tout indicateur d'état prêt pour une notification implicite, ou optionnellement
la réception du message à partir de l'entité mobile comprend la réception d'une réponse du protocole d'authentification extensible, EAP, à un message de notification EAP, et de préférence comprenant en outre l'envoi à l'entité mobile, d'une adresse IP de l'entité mobile dans le message de notification EAP.

14. Dispositif pour transférer une entité mobile (702) recevant des paquets de données à partir d'une passerelle de paquets (708), P-GW, d'un réseau central par l'intermédiaire d'un réseau sans fil cellulaire pour recevoir les paquets de données à partir du P-GW par l'intermédiaire d'un réseau d'accès sans fil de confiance, TWAN, comprenant :
des moyens pour communiquer, par une passerelle TWAN (704), TWAG, une adresse IP nouvellement attribuée pour le TWAN à l'entité mobile par l'intermédiaire d'une procédure EAP-AKA ;
des moyens pour recevoir, par le TWAG, une indication provenant de l'entité mobile indiquant qu'une interface du protocole Internet, IP de l'entité mobile est prête à recevoir les paquets de données par l'intermédiaire du TWAN ; et
en réponse à la réception de l'indication, des moyens pour notifier, par le TWAG, au P-GW que l'entité mobile est prête à recevoir les paquets de données par l'intermédiaire du TWAN, de sorte que le P-GW, sur la base de la notification, lance un routage des paquets de données vers l'entité mobile par l'intermédiaire du TWAN.

15. Support lisible par un ordinateur comprenant des instructions qui, lorsqu'elles sont exécutées par un ordinateur, amènent l'ordinateur à réaliser le procédé de l'une quelconque des revendications 1 à 8, ou 10 à 13.
